# EUROPÄISCHE PATENTANMELDUNG

(11) **EP 1 707 412 A2**
(43) Veröffentlichungstag der Anmeldung: **04.10.2006**
(21) Anmeldenummer: 06006068.8
(22) Anmeldetag: 24.03.2006
(51) Int. Cl.: B60J 1/20

(54) **Seitenfensterrollo mit verschieblicher Welle**

(30) Priorität: 29.03.2005 DE 102005014670
(71) Anmelder: BOS GmbH & Co. KG, 73760 Ostfildern (DE)
(72) Erfinder: Hansen, Melf, 75053 Gondelsheim (DE)
(74) Vertreter: Rüger, Barthelt & Abel Patentanwälte

(57) **Zusammenfassung**

Ein Seitenfensterrollo für Pkw weist an beiden Enden jeweils Lageranordnungen (24) auf. Eine der beiden Lageranordnungen (24) ist mit einem Gewindezapfen (53) versehen, der sich lediglich über ein kurzes Stück der Wickelwelle (22) erstreckt und der entweder in der Wickelwelle (22) verankert ist oder karosserieseitig. Dadurch beschränkt sich die Montage derjenigen Teile, die für die Axialbewegung zuständig sind auf das betreffende Wickelwellenende.

## Beschreibung

Bei den aktuellen Karosserieformen verläuft häufig die B-Säule unter einem von 90° verschiedenen Winkel gegenüber der Fensterunterkante des hinteren Seitenfensters. Unter demselben Winkel verläuft dementsprechend auch die benachbarte Fensterkante.

Wenn ein solches Seitenfenster mit einem Fensterrollo ausgestattet wird, entspricht der Zuschnitt der Rollobahn etwa der durch gerade Kanten angenäherten Fläche des Seitenfensters. Zufolge der Neigung der in Fahrtrichtung liegenden oder vorderen Fensterkante ändert sich beim Ein- und Ausfahren der sichtbare Lichtspalt zwischen der Fensterkante und der benachbarten Rollobahn. Da gerade dieser Lichtspalt im Blickfeld der hinteren Fahrgäste liegt, wird dies von den Designern als unschön empfunden.

Um den Lichtspalt zu vermeiden und dafür zu sorgen, dass die vordere Kante der Rollobahn immer in einem konstanten geringen Abstand zu der Vorderkante des Fensters steht, und zwar unabhängig von der jeweiligen Auszugslänge, werden Wickelwellen verwendet, die eine kombinierte translatorische und rotatorische Bewegung vollführen. Beim Drehen der Rollobahn bewegt sich die Wickelwelle synchron auf die Fensterkante zu bzw. von dieser weg. Diese synchronisierte translatorische Bewegung wird durch ein Gewinde erzeugt.

Zur Erzeugung der translatorischen Bewegung sind eine Reihe von Lösungen bekannt, die allesamt jedoch verhältnismäßig kompliziert zu montieren sind.

Dies gilt insbesondere für solche Seitenfensterrollos, bei denen der Federmotor mit einer durchgehenden Federstange als Widerlager ausgestattet ist. Hierbei wird eine Verlängerung der Federstange mit einem Gewinde versehen, um die translatorische Bewegung zu erzeugen. Diese Lösung ist obendrein schwingungsempfindlich und kann dazu führen, dass bei bestimmten Fahrzeugerschütterungen Klappergeräusche entstehen.

Ausgehend hiervon ist es Aufgabe der Erfindung ein Seitenfensterrollo zu schaffen, das in der Montage einfacher ist.

Diese Aufgabe wird erfindungsgemäß mit einem Seitenfensterrollo mit den Merkmalen des Anspruches 1 gelöst.

Das neue Seitenfensterrollo weist eine Wickelwelle auf, die mit Hilfe einer ersten und einer zweiten Wickelwellenlageranordnung drehbar gelagert ist. Beide Wickelwellenlageranordnungen gestatten eine rotatorische und eine translatorische Bewegung der Wickelwelle.

Um die translatorische Bewegung zu erzeugen ist entwedie erste oder die zweite Wickelwellenlageranordnung mit einem Gewindezapfen und einer auf dem Gewindezapfen sitzenden Gewindebohrung versehen. Der Gewindezapfen befindet sich lediglich im Bereich der betreffenden Wickelwellenlageranordnung und führt lediglich ein solches Stück in die Wickelwelle hinein, wie es dem Hub der Wickelwelle zuzüglich der minimalen Gewindeüberdeckung entspricht. Der Gewindezapfen ragt lediglich ein kurzes Stück weit in die Wickelwelle hinein, und zwar entweder mit seinem Gewindestück oder einem kurzen Verankerungsabschnitt. Der Verankerungsabschnitt ist in jedem Falle kurz gegenüber der Wickelwelle. Insbesondere wird nicht eine etwa vorhandene Federstange als Lagerzapfen verwendet.

Dadurch bleibt die Wickelwelle im Wesentlichen leer und enthält bestenfalls den Federmotor, soweit nicht ein außerhalb der Wickelwelle angeordneter Federmotor, beispielsweise in Gestalt einer Spiralfeder, zur Anwendung kommt.

Sehr platzsparende Verhältnisse ergeben sich, wenn die Wickelwelle rohrförmig ist und darin eine Schraubenfeder untergebracht ist, die den aktiven Teil eines Federmotors bildet.

Die Schraubenfeder ist vorzugsweise mit ihrem,innen liegenden Ende an der Wickelwelle und ihrem außen liegenden Ende an der betreffenden Wickelwellenlageranordnung verankert. Auf diese Weise kann das Innere der Schraubenfeder vollkommen frei bleiben, was erheblich dazu beiträgt, Klappergeräusche zu vermeiden.

Je nach Ausführungsform kann die erste Wickelwellenlageranordnung einen Lagerzapfen aufweisen, der ortsfest und unbeweglich im Fahrzeug angeordnet ist. An diesem Lagerzapfen kann das äußere Ende der Schraubenfeder des Federmotors verankert sein.

Je nach Ausführungsform kann der Lagerzapfen der Wickelwellenlageranordnung, an der die Schraubenfeder verankert ist, gleichzeitig der Gewindezapfen sein, mit dem die Axialbewegung gesteuert wird. In diesem Falle ist der Lagerzapfen der anderen Wickelwellenlageranordnung glatt.

Es besteht auch die Möglichkeit, den Gewindezapfen bei jener Wickelwellenlageranordnung unterzubringen, bei der der Federmotor nicht verankert ist. Diese Lösung ist gegebenenfalls etwas leichter zu montieren. Insbesondere eröffnet sie die Möglichkeit, durch Weglassen des Gewindezapfens wahlweise ein Seitenfensterrollo mit axial beweglicher Wickelwelle zu erzeugen oder ein Seitenfensterrollo, bei dem die Wickelwelle in axialer Richtung in Ruhe bleibt.

Im letzteren Falle kann der Gewindezapfen sowohl drehfest mit der Wickelwelle verbunden sein, während die Gewindebohrung in einem ortsfesten Lagerschild untergebracht ist, oder umgekehrt, sitzt der Gewindezapfen im Lagerschild und die entsprechende Bohrung in der Wickelwelle.

Die Lagerung der Wickelwelle auf der Seite mit dem Gewindezapfen lässt sich noch verbessern, wenn koaxial zu dem Gewindezapfen ein glatt zylindrischer Zapfen angeordnet ist, der mit einer entsprechenden glatten zylindrischen Bohrung zusammenwirkt. Bei einer solchen Anordnung werden die Radialkräfte im Wesentlichen von dem glatt zylindrischen Teil übernommen.

Gemäß einem weiteren Aspekt der Erfindung geht es um eine Seitenfensterrolloanordnung, die ohne Änderung der Lagerschilde bzw. der Wickelwelle wahlweise so ausgeführt werden kann, dass die Wickelwelle bei der Drehbewegung entweder axial bewegt wird oder in Ruhe bleibt.

Diese Aufgabe wird erfindungsgemäß des Seitenfensterrollos mit den Merkmalen des Anspruches 17 gelöst.

Bei diesem erfindungsgemäßen Seitenfensterrollo ist ein verhältnismäßig kurzer Gewindezapfen vorgesehen, der in dem betreffenden Lagerschild bzw. der Wickelwelle entweder eingesetzt werden kann, beispielsweise mittels einer Rastverbindung, um die Axialbewegung zu erzeugen. Wird er bei der Montage nicht eingefügt, bleibt die Wickelwelle axial in Ruhe. Hierzu wird beispielsweise die Vorspannung des Federmotors ausgenutzt. Die dort vorhandene Zugfeder ist bestrebt, die Wickelwelle in eine Endlage elastisch vorzuspannen.

Im Übrigen sind Weiterbildungen der Erfindung Gegenstand von Unteransprüchen.

Beim Durchlesen der Figurenbeschreibung wird im Übrigen klar, dass eine Reihe von Abwandlungen und Merkmalskombinationen möglich sind, die im Einzelnen nicht geoffenbart sind. Die Ausführungsbeispiele beschränken sich auf die für das Verständnis der Erfindung grundlegenden Ausführungsbeispiele.

In der Zeichnung sind Ausführungsbeispiele des Gegenstandes der Erfindung dargestellt. Es zeigen:
- Fig. 1: den aufgebrochenen Fondbereich eines Pkw mit Blick auf die rechte hintere Innenseite, in einer schematisierten perspektivischen Darstellung;
- Fig. 2: das Seitenfensterrollo nach Fig. 1, in einer stark schematisierten Darstellung;
- Fig. 3: die in Fahrtrichtung liegende Wickelwellenlageranordnung des Seitenfensterrollos nach Fig. 2, in einer teilweise geschnittenen Explosionsdarstellung;
- Fig. 4: die hintere Wickelwellenlageranordnung des Fensterrollos nach Fig. 2, in einer geschnittenen Explosionsdarstellung; und
- Fig. 5: ein weiteres Ausführungsbeispiel der Wickelwellenlageranordnung mit Gewindezapfen, in einem Längsschnitt und in einer Explosionsdarstellung.

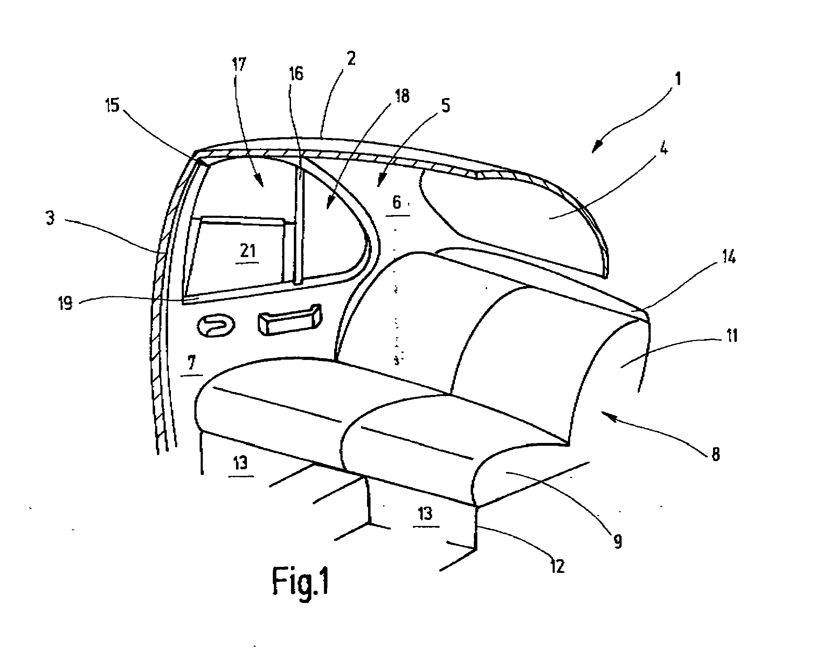

Fig. 1 stellt den aufgebrochenen abgeschnittenen Fondbereich eines Pkw dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserinnenstrukturen, wie Versteifung und Befestigungsmittel nicht gezeigt, da ihre Darstellung für das Verständnis der Erfindung nicht erforderlich ist. Ebenso ist die Därstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Die entsprechende B-Säule wäre auf der weggebrochenen Seite des Fahrzeugs zu denken. Die B-Säulen sind geneigt, so dass ihr oberes Ende zum Fahrzeugheck verlagert ist.

Das Dach 2 geht an seiner Hinterkante in ein Heckfenster über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 6'ist an der B-Säule eine hintere rechte Seitentür 7 in bekannter Weise anscharniert.

Auf der Höhe der hinteren rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu einer Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere rechte Seitentür 7 ist in der für Limousinen üblichen Weise mit einem Seitenfenster 15 versehen. Das Seitenfenster 15 wird durch eine etwa vertikal verlaufende Strebe 16 in einem im Wesentlichen viereckiges Fensterfeld 17 sowie ein etwa dreieckiges Fensterfeld 18 aufgeteilt. Am unteren Ende werden die beiden Felder 17 und 18 von einer Fensterbrüstung 19 begrenzt. Die Fensterbrüstung 19 verläuft unter einem Winkel kleiner als 90° zu einer vorderen Fensterkante 20.

Die in dem Fensterfeld 17 vorhandene Scheibe ist in bekannter Weise auf und ab zu bewegen, wozu sie unter anderem in der vertikalen Strebe 16 in bekannter Weise geführt ist.

Das Fensterfeld 17 ist durch eine zugeordnete Rollobahn 21 wahlweise abzuschatten, die durch einen Schlitz in der Fensterbrüstung 19 aus dem Innenraum der Tür 7 ausziehbar ist. Der Antriebsmechanismus für die Rollobahn 21 befindet sich in dem Innenraum der Tür 7 unterhalb der Fensterbrüstung 19.

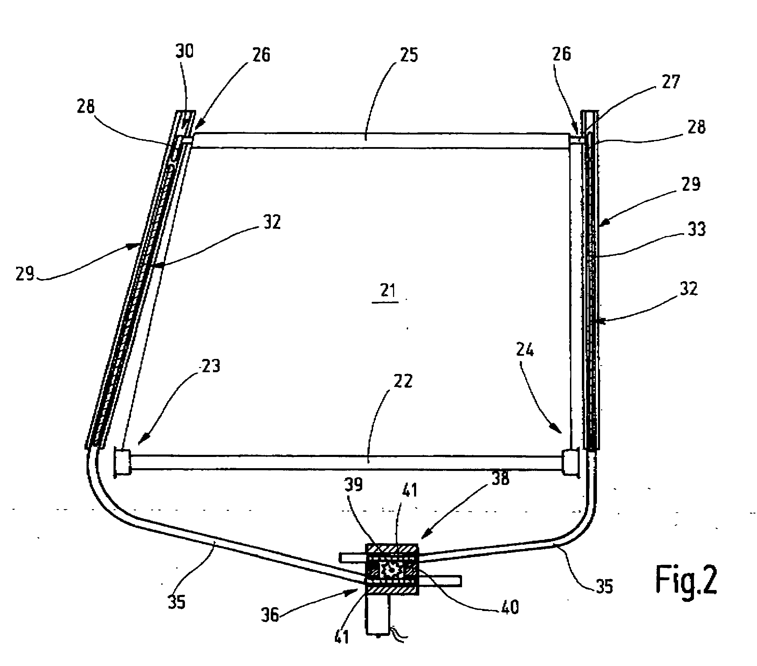

Fig. 2 zeigt die wesentlichen Bestandteile, die dazu vorgesehen sind, die Rollobahn 21 anzutreiben, zu führen bzw. im nicht gebrauchten Zustand aufzubewahren.

Die Rollobahn 21 weist einen Zuschnitt auf, der etwa der Fläche des Fensterfeldes 17 entspricht und durch im Wesentlichen gerade Kanten angenähert ist. Die Rollobahn 21 ist mit ihrer Unterkante an einer Wickelwelle 22 befestigt, die zwischen Wickelwellenlageranordnungen 23 und 24 drehbar und axial beweglich gelagert ist.

Die von der Wickelwelle 22 abliegende Kante der Rollobahn 21 bildet eine schlauchförmige Schlaufe 25, durch die hindurch eine Zugstabanordnung hindurch führt. Von der Zugstabanordnung sind lediglich deren außen liegende Führungsglieder 26 zu erkennen. Jedes der Führungsglieder 26 besteht aus einem stangenförmigen Halsteil 27, an dessen freiem Ende ein Führungskörper 28 angeformt ist. Die Führungsglieder 26 sind in axialer Richtung, bezogen auf den Halsteil 27, in einem rohrförmigen Verbindungsstück der Zugstabanordnung, das sich in der schlauchförmigen Schlaufe 24 befindet, hin und her bewegbar.

Um die Rollobahn 21 während einer Ausfahrbewegung zu führen, verlaufen seitlich neben der ausgezogenen Rollobahn 21 zwei Führungsschienen 29. Jede Führungsschiene 29 enthält eine in Längsrichtung durchlaufende Nutenkammer 30, die sich über einen Nutenschlitz 31 in Richtung auf die Rollobahn 21 öffnet und im Querschnitt kreisförmig ist. Die Weite des Nutenschlitzes 31 entspricht der in dieser Richtung liegenden Abmessung des Halsteils 27, während der Führungskörper 28 in seinen Abmessungen und seiner Querschnittsgestalt an die Nutenkammer 30 angepasst ist.

In den beiden Nutenkammern 30 der beiden Führungsschienen 29 laufen axial beweglich zugehörige und schraubenförmig verzahnte Schubglieder 32. Jedes Schubglied 32 besteht aus einer zylindrischen Seele 33, um die herum schraubenförmig eine erhabene Wendel 34 umläuft. Die Wendel 34 bildet einen schraubenförmig um die Seele 33 herumlaufenden Zahn. Das Schubglied 32 hat somit die Gestalt einer schräg verzahnten flexiblen Zahnstange mit kreisförmigem Querschnitt.

Die Schubglieder 32 sind an sich nur sehr wenig knicksteif, weshalb sie in der Nutenkammer 30 ausknicksicher geführt sind.

Am unteren Ende jeder Führungsschiene 29 schließt sich ein Führungsrohr 35 an, das die Nutenkammer 30 der betreffenden Führungsschiene 29 mit einem Getriebemotor 36 verbindet.

Zu dem Getriebemotor 36 gehört ein permanent erregter Gleichstrommotor 37, der ein Getriebe antreibt, das sich in einem Getriebegehäuse 38 befindet. Auf einer Ausgangswelle 39 sitzt ein Ausgangszahnrad 40, das so gestaltet ist, dass es formschlüssig in die Verzahnung der beiden Schubglieder 32 eingreifen kann. Damit die Schubglieder 32 seitlich nicht ausweichen können, sind sie in Bohrungen 41 geführt, die tangential an dem Ausgangszahnrad 40 vorbei laufen. An diese Bohrungen 41 schließen die Führungsrohre 35 an.

In Verlängerung der Bohrungen 41 können noch Speicherrohre vorhanden sein, um den nicht aktiven Teil des Schubglieds geordnet zu führen.

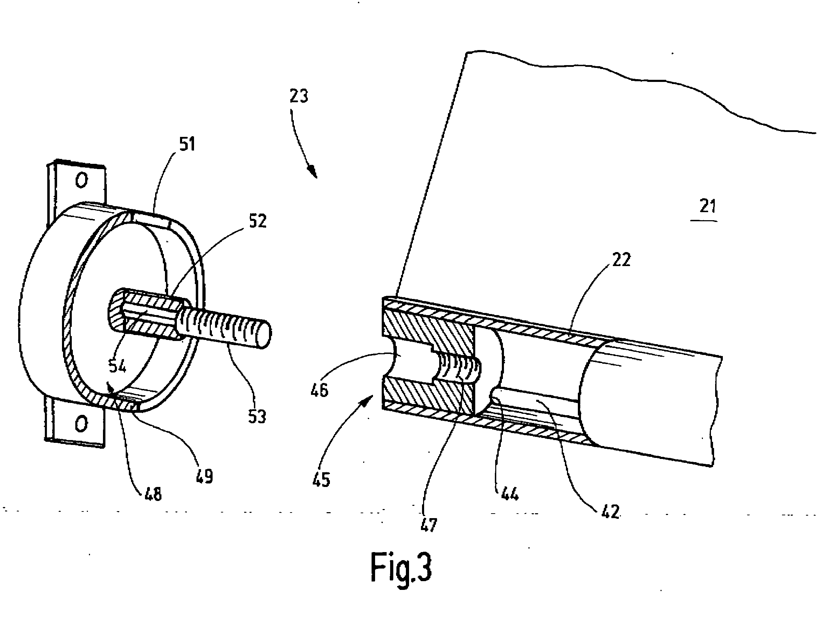

Fig. 3 zeigt in einer perspektivischen Explosionsdarstellung die Wickelwellenlageranordnung 23. Wie zu erkennen ist, ist die Wickelwelle 22 ein rohrförmiges Teil, aus deren Innenseite sich eine Rippe 42 erhebt, die auf der Außenseite eine Kedernut bildet, in der in bekannter Weise die Rollobahn 21 verankert ist.

An dem betreffenden Ende der Wickelwelle 22 sitzt in dieser ein Einsatzstück 43, das eine seitliche Nut 44 enthält, die formschlüssig die Rippe 42 übergreift und somit gleichzeitig eine Drehsicherung gegenüber der Wickelwelle 22 bildet. Das Einsatzstück 43 ist axial unverschieblich.

Das Einsatzstück 43 enthält eine zu der Wickelwelle 22 koaxiale Stufenbohrung 45. Ein außen liegender Abschnitt 46 der Stufenbohrung 45 bildet eine glattwandige zylindrische Lagerbohrung 46. An ihrem inneren Ende geht die zylindrische Lagerbohrung 46 in eine Gewindebohrung 47 über, die zu der zylindrischen Lagerbohrung 46 koaxial ist.

Zu der Wickelwellenlageranordnung 23 gehört ferner ein Lagerschild 48, aus dem einen kurzen Kragen 49 in Richtung auf die Wickelwelle 22 vorsteht. Der Kragen 49 ist bei 51 unterbrochen und bildet hier einen kurzen Schlitz durch den hindurch die Rollobahn 21 austritt.

Das Lagerschild 48 trägt einen zylindrischen rohrförmigen Zapfen 52 mit zylindrisch glatter Außenumfangsfläche. Der Außendurchmesser des Zapfens 52 ist an die zylindrische Lagerbohrung 46 angepasst. Dadurch kann der Zapfen 52 als Lagerzapfen für die zylindrische Lagerbohrung 46 dienen. In dem zylindrischen Zapfen 52 ist koaxial und in Verlängerung zu diesem ein Gewindezapfen 53 verankert, dessen Gewinde zu der Gewindebohrung 47 passt. An seiner Rückseite verlängert sich der Gewindezapfen 53 mit einem Einsteckzapfen 54, mit deren Hilfe der Gewindezapfen 53 in dem Lagerzapfen 52 drehfest verankert ist. Durch nicht weiter gezeigte Hinterschneidungen kann der Einsteckzapfen 45 in dem Lagerzapfen 52 verrastet werden oder er wird beim Spritzen des Lagerschilds 48 umspritzt, wobei sich Hinterschneidungen in dem Kunststoff verankern.

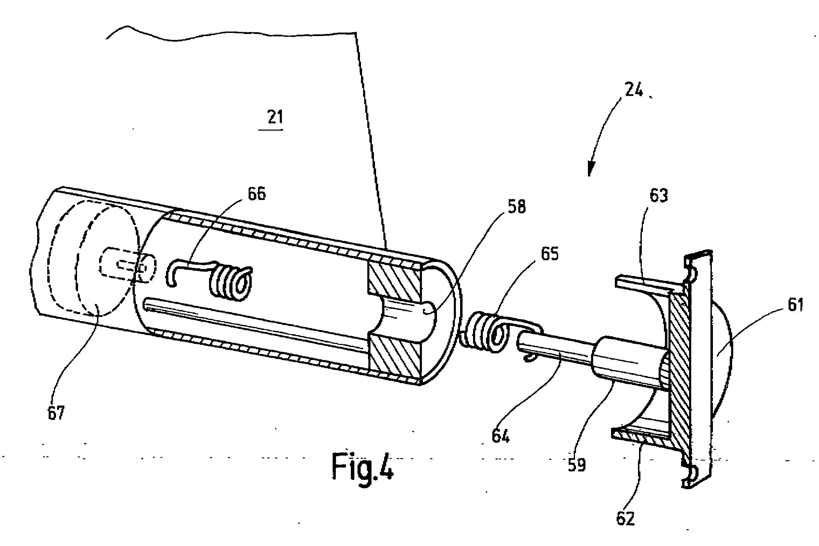

Die Wickelwellenlageranordnung 24 ist in Fig. 4 veranschaulicht.

Zu der Wickelwellenlageranordnung 24 gehört eine Lagerbuchse 57, die axial gesichert und drehfest in dem betreffenden Ende der Wickelwelle 22 steckt. Die Lagerbuchse 57 enthält eine koaxiale durchgehende Lagerbohrung 58.

Die Lagerbohrung 58 wirkt mit einem Lagerzapfen 59 zusammen, der einstückig Bestandteil eines Lagerschildes 61 ist. Das Lagerschild 61 ist in ähnlicher Weise mit einem Kragen 62 versehen, der bei 63 einen Schlitz zum Austritt der Rollobahn 21 enthält.

Der Lagerzapfen 59 ist in seinem Außendurchmesser an den Durchmesser der Lagerbohrung 58 angepasst, um eine weitgehend spielfreie Lagerung zu ergeben, die gleichzeitig auch in axialer Richtung beweglich ist. Die Länge des Lagerzapfens 59 bzw. der Lagerbohrung 58 ergibt sich aus der nachfolgenden runktionsbeschreibung.

In Verlängerung des Lagerzapfens 59 ist dieser koaxial mit einem Verankerungszapfen 64 versehen, an dem ein Ende einer Schraubenzugfeder 65 eingehängt ist. Ihr anderes Federende 66 ist in einem in der Wickelwelle 22 enthaltenen gestrichelt gezeigten Widerlager 67 verankert. Der Durchmesser der Lagerbohrung 58 ist so gewählt, dass die Schraubenfeder 65 durch die Lagerbohrung 58 hindurch herausgezogen werden kann, um sie bei der Montage in dem Verriegelungszapfen 64 einzuhängen.

Die Schraubenfeder 65 bildet einen Federmotor.

Die Wirkungsweise der insoweit beschriebenen Anordnung ist wie folgt:

Wenn die Rollobahn 21 maximal auf der Wickelwelle 22 aufgewickelt ist, befindet sich die schlauchförmige Schlaufe 24 mit dem darin enthaltenen Zugstab etwa auf der Höhe der unteren Fensterbrüstung 19. In dieser Position ist bei der Wickelwellenlageranordnung 23 das Stirnende der Wickelwelle 22 maximal an das Lagerschild 48 angenähert, d.h. der dort vorhandene drehfeste Gewindezapfen 53 ist bis auf ein kleines toleranzbedingtes Reststück in die Gewindebohrung 47 hinein geschraubt. Die Lagerbohrung 43 liegt auf dem Lagerzapfen 52 auf und kann zusätzlich die Wickelwelle 22 führen.

Im Bereich der anderen Wickelwellenlageranordnung 24 ist die Wickelwelle 22 ein großes Stück von dem-Lagerzapfen 59 heruntergezogen. Der Lagerzapfen 59 und die Lagerbohrung 58 überdecken sich nur noch ein kleines Stück, gesehen in axialer Richtung des Lagerzapfens 59. Die Länge der überdeckung reicht aus, um eine zuverlässige Drehlagerung der Wickelwelle 22 zu erreichen. Die den Federmotor bildende Schraubenfeder 65 ist, bis auf eine vorgegebener Restspannung, entspannt um nach wie vor eine Vorspannung in der Rollobahn 21 zu erzeugen.

In dieser Position sind die Schubglieder 32 aus den Nutenkammern 30 zurückgezogen.

Wenn der Benutzer, ausgehend von dieser Stellung den Getriebemotor 36, im Sinne eines Ausfahrens der Rollobahn 21 in Gang setzt, werden über die formschlüssige Kupplung zwischen dem Ausgangszahnrad 40 und den Schubgliedern 32, die Schubglieder 32 in die Nutenkammer 30 vorgeschoben. Dabei stoßen sie an den Führungskörpern 28 an und schieben diese vor sich her. Hierdurch wird die Rollobahn 21 aus dem Türinneren herausgezogen und mehr oder weniger stark vor dem Fensterabschnitt 17 aufgespannt.

Das Abziehen der Rollobahn 21 hat eine entsprechende Drehbewegung der Wickelwelle 22 zur Folge. Da sie über die Gewindeverbindung zwischen dem Gewindezapfen 53 und der Gewindebohrung 47 mit dem in der Tür 7 ortsfesten Lagerschild 48 gekuppelt ist, wird sie synchron mit der Drehbewegung axial von dem Lagerschild 48 wegbewegt.

Die Wickelwelle 22 schraubt sich mit ihrem Lagerstück 43 gleichsam von dem Gewindezapfen 53 herunter. Es versteht sich, dass hierzu das Einzelstück 43 in axialer Richtung in der Wickelwelle 22 verankert ist, um die ihm aufgezwungene Axialbewegung auch auf die Wickelwelle 22 zu übertragen.

Bei vollständig ausgefahrener Rollobahn 21 steckt der Gewindezapfen 53 nunmehr ein kurzes Stück in der Gewindebohrung 57. Die Überdeckung ist ausreichend groß, um bei der umgekehrten Bewegung ein ordnungsgemäßes Einschrauben zu bewerkstelligen, d. h. die Überdeckung beträgt je nach Materialart der Gewindebohrung 47 und des Lagerzapfens 53 drei bis ca. sieben Gewindegänge.

Außerdem überdeckt sich auch noch der Lagerzapfen 52 mit der Lagerbohrung 46, damit im Bereich der Wickelwellenlageranordnung 23 eine ordnungsgemäße radiale Lagerung der Wickelwelle 22 gewährleistet ist.

Im Bereich der anderen Wickelwellenlageranordnung 24 ist die Wickelwelle 22 maximal auf den Lagerzapfen 59 aufgeschoben und steht in einem toleranzbedingten Minimalabstand zu dem Lagerschild 61.

Die Schraubenfeder 65 ist maximal aufgezogen. Da sie als Zugfeder ausgebildet ist, zieht sie die Wickelwelle 22 zu dem Lagerschild 61 hin.

Wie unschwer zu erkennen ist, genügt es, den Gewindezapfen 53 wegzulassen, um ein Seitenfensterrollo zu schaffen, dessen Wickelwelle 22 während der Drehbewegung keine Axialbewegung vollführt. Durch die Wirkung der Schraubenfeder 65 würde die Wickelwelle 22 ständig in einer an dem Lagerschild 61 anliegenden Position gehalten werden, während sie drehbar auf dem Zapfen 59 gelagert ist. Am gegenüberliegenden Ende wäre die Wickelwelle 22 ausschließlich durch das Zusammenwirken der Lagerbohrung 56 mit dem Lagerzapfen 52 drehbar gelagert.

Es bedarf keiner weiteren zeichnerischen Darstellung um zu erkennen, dass die axiale Verschiebbarkeit der Wickelwelle 22 auch erreicht werden könnte, wenn der Lagerzapfen 59 des Lagerschilds 61 als Gewindezapfen ausgeführt wird, während die Lagerbohrung 58 eine Gewindebohrung ist.

Der Gewindezapfen 53 auf der anderen Seite der Wickelwelle 22 würde dann naturgemäß entfallen. In seiner Wirkung nach außen wäre die Funktion die gleiche.

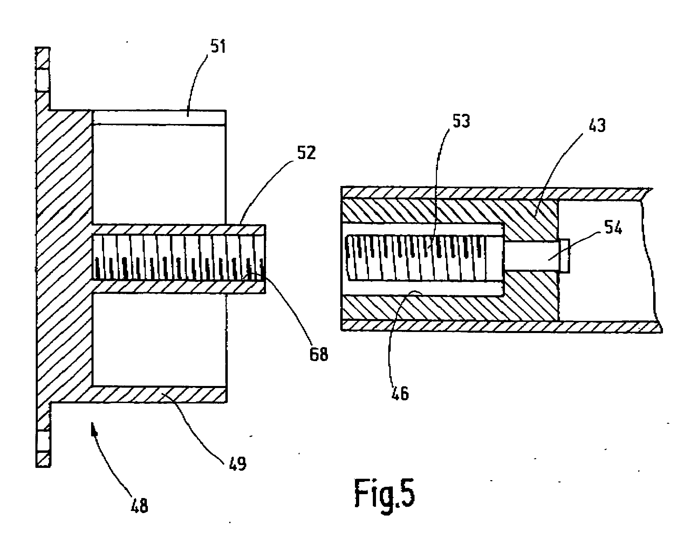

Fig. 5 zeigt ein weiteres Ausführungsbeispiel für die Wickelwellenlageranordnung 23.

Bei dieser Ausführungsform ist der Lagerzapfen 52 als Hohlzapfen ausgeführt, der koaxial eine Gewindebohrung 68 enthält, die funktionsmäßig der Gewindebohrung 47 aus Fig. 3 entspricht. Das Einsatzstück 43 enthält, wie zuvor, die Lagerbohrung 46, in der der Gewindezapfen 53 koaxial untergebracht ist. Der Gewindezapfen 53 ist mit seinem Einsteckzapfen 54 drehfest in einer koaxialen Öffnung des Einsatzstücks 43 verankert.

Der Vorteil dieser Anordnung besteht darin, dass das Gewinde des Zapfens 53 in der Lagerbohrung 46 geschützt untergebracht ist und keinen zusätzlichen axialen Raum beansprucht.

Auch bei dieser Ausführungsform kann durch einfaches Weglassen des Gewindezapfens 53 wahlweise ein Fensterrollo ohne Axialbewegung der Wickelwelle 22 erzeugt werden.

Bei sämtlichen Ausführungsformen ragt der Gewindezapfen der für die Axialbewegung zuständig ist, lediglich ein Stück weit in die Wickelwelle hinein. Insbesondere ist es möglich den Gewindezapfen außerhalb der Wickelwelle unterzubringen, so dass es, abgesehen von der Schraubenfeder des Federmotors keine weiteren Teile gibt, die sich über eine längere Strecke durch die Wickelwelle 22 hindurch erstrecken und Geräusche hervorrufen können.

Die Montage ist außerdem weiter vereinfacht, weil diejenigen Teile, die für die Axialbewegung zuständig sind, sich im Bereich des betreffenden Endes der Wickewelle konzentrieren und, abgesehen von dem Rohr der Wickelwelle ansonsten keine Verbindung zum anderen Ende der Wickelwelle hin haben.

Ein Seitenfensterrollo für Pkw weist an beiden Enden jeweils Lageranordnungen auf. Eine der beiden Lageranordnungen ist mit einem Gewindezapfen versehen, der sich lediglich über ein kurzes Stück der Wickelwelle erstreckt und der entweder in der Wickelwelle verankert ist oder karosserieseitig. Dadurch beschränkt sich die Montage derjenigen Teile, die für die Axialbewegung zuständig sind auf das betreffende Wickelwellenende.

## Patentansprüche

1. Seitenfesterrollo für Kraftfahrzeuge , mit einer Rollobahn (21),
mit einem Zugstab (26), der an einer Kante (24) der Rollobahn (21) befestigt ist,
mit einer Wickelwelle (22), an der die Rollobahn (21) mit einer anderen von dem Zugstab (26) abliegenden Kante befestigt ist und die zwei Enden aufweist,
mit einem Federmotor (65), der dazu eingerichtet ist die Rollowelle (22) im Sinne eines Aufwickels der Rollobahn (21) auf die Wickelwelle (21) vorzuspannen,
mit einer ersten Wickelwellenlageranordnung (24), durch die die Wickelwelle (22) an ihrem ersten Ende rotatorisch und translatorisch gelagert ist,
mit einer zweiten Wickelwellenlageranordnung (23), durch die die Wickelwelle (22) an ihrem zweiten Ende rotatorisch und translatorisch gelagert ist,
wobei entweder die erste oder die zweite Wickelwellenlageranordnung (23,24) einen Gewindezapfen (53) und eine auf dem Gewindezapfen (53) sitzenden Gewindebohrung (47,48) aufweist, um die die Wickelwelle (22) bei einer Rotation um ihre Längsachse translatorisch zu bewegen.

2. Seitenfensterrollo nach Anspruch 1, **dadurch gekennzeichnet, dass** die Wickelwelle (22) rohrförmig ist.

3. Seitenfensterrollo nach Anspruch 2, **dadurch gekennzeichnet, dass** der Federmotor (65) eine Schraubenfeder aufweist, die in der Wickelwelle (22) untergebracht ist.

4. Seitenfensterrollo nach Anspruch 1, **dadurch gekennzeichnet, dass** der Federmotor (65) mit einem seiner Enden an der Wickelwellenlageranordnung (23,24) verankert ist.

5. Seitenfensterrollo nach Anspruch 3, **dadurch gekennzeichnet, dass** das Innere der Schraubenfeder (65) frei ist.

6. Seitenfensterrollo nach Anspruch 3, **dadurch gekennzeichnet, dass** die Schraubenfeder (65) mit ihrem innen liegenden Ende (66) an der Wickelwelle (22) und mit ihrem außen liegenden Ende mit der ersten Wickelwellenlageranordnung (24) verbunden ist.

7. Seitenfensterrollo nach Anspruch 1, **dadurch gekennzeichnet, dass** die erste Wickelwellenlageranordnung (24) einen Lagerzapfen (59) aufweist, der ortsfest und unbeweglich in dem Kraftfahrzeug angeordnet ist.

8. Seitenfensterrollo nach den Ansprüchen 3 und 7, **dadurch gekennzeichnet, dass** an dem Lagerzapfen (59) das äußere Ende einer Schraubenfeder (66) des Federmotors verankert ist.

9. Seitenfensterrollo nach Anspruch 7, **dadurch gekennzeichnet, dass** der Gewindezapfen (53) der Lagerzapfen (59) der ersten Wickelwellenlageranordnung (24) ist und die Wickelwelle (22) die Gewindebohrung enthält.

10. Seitenfensterrollo nach Anspruch 9, **dadurch gekennzeichnet, dass** die zweite Wickelwellenlageranordnung (23) einen zylindrisch glatten Lagerzapfen (52) aufweist, der mit einer zylindrisch glatten Lagerbohrung (46) zusammenwirkt, wobei entweder der Lagerzapfen (52) oder die Lagerbohrung (47) in dem Kraftfahrzeug orstfest angeordnet sind.

11. Seitenfensterrollo nach Anspruch 7 oder 8, **dadurch gekennzeichnet, dass** der Lagerzapfen (59) der ersten Wickelwellenlageranordnung (24) als zylindrisch glatter Lagerzapfen ausgeführt ist.

12. Seitenfensterrollo nach Anspruch 11, **dadurch gekennzeichnet, dass** die zweite Wickelwellenlageranordnung (23) einen Lagerzapfen (52,53) aufweist, der als der Gewindezapfen (53) ausgeführt ist oder trägt.

13. Seitenfensterrollo nach Anspruch 12, **dadurch gekennzeichnet, dass** der Gewindezapfen (53) in dem Kraftfahrzeug ortsfest angeordnet ist.

14. Seitenfensterrollo nach Anspruch 12, **dadurch gekennzeichnet, dass** der Gewindezapfen (53) in der Wickelwelle (22) unbeweglich befestigt ist.

15. Seitenfensterrollo nach Anspruch 12, **dadurch gekennzeichnet, dass** koaxial zu dem Gewindezapfen (53) ein zylindrisch glatter Lagerzapfen (52) vorgesehen ist.

16. Seitenfensterrollo nach Anspruch 1, **dadurch gekennzeichnet, dass** der Gewindezapfen (53) eine Länge aufweist, die etwa dem axialen Hub der Wickelwelle (22) zuzüglich der minimalen Gewindeüberdeckung mit der Gewindebohrung (47) entspricht.

17. Seitenfesterrollo für Kraftfahrzeuge ,
mit einer Rollobahn (21),
mit einem Zugstab (26), der an einer Kante (24) der Rollobahn (21) befestigt ist,
mit einer Wickelwelle (22), an der die Rollobahn (21) mit einer anderen von dem Zugstab (25) abliegenden Kante befestigt ist und die zwei Enden aufweist,
mit einem Federmotor (65), der dazu eingerichtet ist die Rollowelle (22) im Sinne eines Aufwickels der Rollobahn (21) auf die Wickelwelle (22) vorzuspannen,
mit einer ersten Wickelwellenlageranordnung (24), durch die die Wickelwelle (22) an ihrem ersten Ende gelagert ist, und an der sich der Federmotor (65) abstützt,
mit einer zweiten Wickelwellenlageranordnung (23), durch die die Wickelwelle (22) an ihrem zweiten Ende rotatorisch und translatorisch gelagert ist,
wobei die zweite wickelwellenlageranordnung (23) einen zylindrisch glatten Lagerzapfen (52), eine Lagerbohrung (46) für den Lagerzapfen (52), einen Sitz (52) für einen zu dem Lagerzapfen (52) koaxialen Gewindezapfen (53) und eine für den Gewindezapfen (53) vorgesehene und zu der Lagerbohrung (46) koaxiale Gewindebohrung (47) aufweist, um die Wickelwelle (22) lediglich bei eingesetztem Gewindezapfen (53) während einer Rotation um ihre Längsachse translatorisch zu bewegen.
